# EUROPEAN PATENT APPLICATION

(11) **EP 4 804 318 A1**
(43) Date of publication of application: **09.09.2026**
(21) Application number: 24896060.1
(22) Date of filing: 18.10.2024
(51) Int. Cl.: H01M 50/471, H01M 50/342

(54) **BATTERY CELL, BATTERY AND ELECTRICAL DEVICE**

(30) Priority: 29.11.2023 CN 202323260109 U
(71) Applicant: Contemporary Amperex Technology Co., Limited, Ningde, Fujian 352100 (CN)
(72) Inventor: KE, Haibo, Ningde, Fujian 352100 (CN); HUANG, Shoujun, Ningde, Fujian 352100 (CN); LI, Quankun, Ningde, Fujian 352100 (CN); MAO, Guoan, Ningde, Fujian 352100 (CN); YANG, Kaihuan, Ningde, Fujian 352100 (CN); JIN, Haizu, Ningde, Fujian 352100 (CN)
(74) Representative: Kraus & Lederer PartGmbB
(86) International application number: PCT/CN2024/125829
(87) International publication number: WO 2025/112967

(57) **Abstract**

A battery cell (100), a battery (200) and an electric device (1000). The battery cell (100) includes a housing (10), a shielding member (20) and a pressing member (30), where the housing (10) is provided with a first wall (11), the first wall (11) being provided with a weak part (110); the shielding member (20) is disposed in the housing (10), and in the direction of the thickness h of the first wall (11), the shielding member (20) covers at least part of the weak part (110); the pressing member (30) is located on the side of the shielding member (20) facing away from the first wall (11), the pressing member (30) pressing against the shielding member (20).

## Description

### CROSS-REFERENCE TO RELATED APPLICATION

The present application claims priority and benefit to Chinese Patent Application No. 202323260109.2, filed with China National Intellectual Property Administration on November 29, 2023, which is incorporated herein by reference in its entirety.

### TECHNICAL FIELD

The present application relates to the technical field of batteries, and in particular, to a battery cell, a battery, and an electric device.

### BACKGROUND

The bottom of the battery cell is provided with a weak part, and the weak part is, for example, an anti-explosion valve. The electrolyte in the battery cell may be in contact with the anti-explosion valve for a long time, and the flow of the electrolyte may have a certain impact on the anti-explosion valve, resulting in that the anti-explosion valve may be opened in advance. In order to reduce the impact of the electrolyte on the anti-explosion valve, in the related art, a shielding member for covering the anti-explosion valve is disposed in the battery cell. However, the shielding member is prone to migrating to other positions along with the flow of the electrolyte, and thus cannot continuously cover the anti-explosion valve.

### SUMMARY

The present application provides a battery cell, a battery, and an electric device, as well as a problem that a shielding member is prone to migrating to other positions along with the flow of an electrolyte, and thus cannot continuously cover a weak part.

The battery cell according to the embodiments of the present application includes:
a housing, where the housing is provided with a first wall, and the first wall is provided with a weak part;
a shielding member, where the shielding member is disposed in the housing, and the shielding member covers at least part of the weak part in a thickness direction of the first wall; and
a pressing member, where the pressing member is located on a side of the shielding member facing away from the first wall, and the pressing member presses against the shielding member.

In the battery cell according to the embodiments of the present application, the weak part can be opened when pressure in the housing reaches a certain value, so as to reduce the pressure in the housing, thereby reducing the probability of damage to the structure of the battery cell. The shielding member can reduce the impact of the electrolyte on at least part of the weak part in the thickness direction of the first wall, thereby reducing, to some extent, the probability that the weak part is opened in advance due to the impact of the electrolyte. The pressing member can apply a certain force to the shielding member, so as to limit the position of the shielding member and reduce the probability that the shielding member migrates to other positions along with the flow of the electrolyte, so that the shielding member can continuously cover the weak part.

In some embodiments, the first wall is provided with a first groove and a second groove; the first groove extends from an outer surface of the first wall to an inner surface of the first wall in the thickness direction of the first wall, the second groove penetrates through a bottom surface of the first groove and the inner surface of the first wall, and the weak part is disposed in the first groove.

In this way, the arrangement of the first groove and the second groove is conducive to thinning the first wall, and the weak part is disposed in the first groove, so that the weak part can be opened in time when the pressure in the housing reaches a certain value, thereby improving the functional stability of the weak part.

In some embodiments, the pressing member includes a plate body and a protrusion disposed on the plate body, the protrusion presses against the shielding member, and the protrusion is configured to form a fluid channel.

In this way, the protrusion can press against the shielding member to reduce the probability that the shielding member migrates to other positions along with the flow of the electrolyte, so that the shielding member can continuously cover the weak part. The fluid channel enables part of the electrolyte to flow between the shielding member and the pressing member. When the pressure in the housing reaches a certain value, the electrolyte can impact the shielding member and further impact the weak part, so that the weak part can be opened.

In some embodiments, a plurality of the protrusions are provided, the plurality of protrusions are arranged in a width direction of the pressing member, at least one of the protrusions presses against the shielding member, and the fluid channel is formed between the plurality of protrusions.

In this way, the plurality of protrusions can increase a contact area between the pressing member and the shielding member, so that the pressing member can effectively press against the shielding member. The fluid channel formed between the plurality of protrusions can enable part of the electrolyte to flow according to a predetermined flow path, so that the flow behavior of the electrolyte can be more accurately controlled. When the pressure in the housing reaches a certain value, the electrolyte impacts the shielding member along a predetermined flow path and further impacts the weak part, so that the weak part can be opened.

In some embodiments, the plurality of protrusions all press against the shielding member, and an area where each protrusion presses against the shielding member is equal.

In this way, the area where each protrusion presses against the shielding member is equal, which ensures that a pressing force on the shielding member is evenly distributed, and an unbalanced pressure effect caused by a certain protrusion being too large or too small will not occur, which helps to improve the stability of the shielding member and helps the electrolyte to be evenly distributed around the weak part.

In some embodiments, a width of the weak part is W1, a maximum distance of the plurality of protrusions in the width direction of the pressing member is W2, and W1 and W2 satisfy: W2 ≥ W1 + 4, in mm.

In this way, a region where the protrusion presses against the shielding member can be distributed outside the weak part, so that the shielding member can be effectively pressed against.

In some embodiments, the maximum distance of the plurality of protrusions in the width direction of the pressing member is W2, a width of the shielding member is W3, and W2 and W3 satisfy: 0 ≤ |W3 - W2| ≤ 10, in mm.

In this way, the width of the shielding member is close to that of the region that the protrusions can press against, enabling the edges of the shielding member to be effectively pressed against.

In some embodiments, the shielding member includes a first surface and a second surface opposite to each other, the protrusion presses against the first surface, an area of the first surface in contact with the protrusion is S1, an area of the first surface is S2, and S1 and S2 satisfy:
20% ≤ S1/S2 ≤ 80%.

In this way, within this range, the protrusion can effectively press against the first surface, thereby stably limiting the position of the shielding member and reducing the probability that the shielding member migrates to other positions along with the flow of the electrolyte, so that the shielding member can continuously cover the weak part. In addition, the electrolyte can flow in a region where the protrusion is not in contact with the first surface. When the pressure in the housing reaches a certain value, the electrolyte can impact the shielding member and further impact the weak part, so that the weak part can be opened.

In some embodiments, in the thickness direction of the first wall, a projection of the pressing member completely covers a projection of the shielding member.

In this way, in the thickness direction of the first wall, the projection of the pressing member completely covers the projection of the shielding member, so that the shielding member is always within the coverage of the pressing member, thereby enabling the pressing member to effectively reduce the impact of the electrolyte on the shielding member. As a result, the probability that the shielding member migrates to other positions along with the flow of the electrolyte is reduced, which allows the shielding member to continuously cover the weak part.

In some embodiments, the shielding member is provided with a contact region in contact with the pressing member, and the contact region is spaced apart from the weak part in a direction perpendicular to a thickness of the first wall.

In this way, the contact region is spaced apart from the weak part in the direction perpendicular to the thickness of the first wall, which can reduce the probability that the pressing member is in contact with the weak part, thereby reducing the probability that the pressing member applies pressure to the weak part, and further reducing the probability that the weak part is opened in advance under the pressure of the pressing member.

In some embodiments, the shielding member includes a first portion, a second portion, and an adhesive structure disposed on the second portion; the first portion is connected to the second portion, the first portion covers at least part of the weak part in the thickness direction of the first wall, the second portion is bonded to the first wall by the adhesive structure, and the pressing member presses against the second portion.

In this way, the first portion covers at least part of the weak part in the thickness direction of the first wall, thereby providing protection for the weak part. The second portion is bonded to the first wall by the adhesive structure, so that the shielding member can form a relatively stable connection to the first wall. The pressing member pressing against the second portion further enhances the stability of the connection between the shielding member and the first wall.

In some embodiments, the adhesive structure protrudes from a surface of the second portion, the adhesive structure and the first portion jointly define a gas channel, and the gas channel extends to an edge of the shielding member.

In this way, gas in the housing can flow to the weak part through the gas channel, so that the weak part can be opened when the pressure in the housing reaches a certain value, thereby improving the functional stability of the weak part. In addition, the arrangement of the gas channel also facilitates detection of the welding of the weak part.

In some embodiments, the pressing member includes a width edge, and in a length direction of the shielding member, the adhesive structure includes a first edge and a second edge opposite to the first edge; the first edge is proximal to the width edge relative to the second edge, a distance between the first edge and the second edge is A1, a distance between the first edge and the width edge is A2, and A1 and A2 satisfy: 10% ≤ A1/A2 ≤ 80%.

In this way, the pressing member can effectively press against the shielding member, and can further press against a region where the adhesive structure is bonded to the shielding member and the first wall, thereby improving the connection strength between the shielding member and the first wall.

In some embodiments, the battery cell includes an electrode assembly, an insulating film, and a connecting sheet; the insulating film wraps the electrode assembly and is located on a side of the pressing member facing away from the first wall, one end of the connecting sheet is connected to the insulating film, the protrusion presses against the other end of the connecting sheet, and a thickness of the shielding member is less than or equal to a thickness of the connecting sheet.

In this way, the insulating film can reduce the probability of contact between the electrode assembly and the housing, thereby reducing the probability of short circuit of the electrode assembly, and further improving the reliability of the battery cell. The connecting sheet can fix the insulating film, improve the stability of the insulating film wrapping the electrode assembly, and connect the insulating film and the pressing member, thereby reducing the probability that the pressing member moves along with the flow of the electrolyte. The thickness of the shielding member is less than or equal to the thickness of the connecting sheet, which can reduce the space occupation of the shielding member in the thickness direction of the first wall and improve the internal space utilization rate of the housing.

In some embodiments, the housing includes a housing body and an end cover plate, the housing body is provided with an opening, the end cover plate lids the opening of the housing body, and the first wall is located on the housing body.

In this way, the end cover plate can separate the internal environment from the external environment of the housing body, thereby avoiding adverse effects of the external environment on the internal environment. The first wall is located on the housing body, so that the weak part has a relatively large design space, thereby improving the pressure relief effect of the weak part.

The battery according to the embodiments of the present application includes the battery cell according to any one of the above embodiments.

As the battery includes the battery cell described above, the battery at least includes all the beneficial effects of the battery cell, which is not described in detail herein.

The electric device according to the embodiments of the present application includes the battery according to the above embodiments or the battery cell according to any one of the above embodiments.

As the electric device includes the battery or battery cell described above, the electric device at least includes all the beneficial effects of the battery or battery cell, which is not described in detail herein.

The additional aspects and the advantages of the present application will be partially provided in the following description, will partially become apparent from the following description, or will be learned through the practice of the present application.

### BRIEF DESCRIPTION OF THE DRAWINGS

The above and/or additional aspects and advantages of the present application will become apparent and readily understood from the description of embodiments in conjunction with the drawings below, in which:
FIG. 1 is a schematic structural diagram of an electric device according to some embodiments of the present application;
FIG. 2 is a schematic structural diagram of a battery according to some embodiments of the present application;
FIG. 3 is an exploded diagram of a battery cell according to some embodiments of the present application;
FIG. 4 is a partial schematic diagram of a battery cell according to some embodiments of the present application;
FIG. 5 is a schematic structural diagram of a first wall and a weak part according to some embodiments of the present application;
FIG. 6 is a cross-sectional view of a first wall, a shielding member, and a pressing member according to some embodiments of the present application;
FIG. 7 is an enlarged view of part a of the cross-sectional view of the first wall, the shielding member, and the pressing member of FIG. 6;
FIG. 8 is an exploded schematic diagram of a pressing member, a shielding member, and a weak part according to some embodiments of the present application;
FIG. 9 is a schematic diagram of a positional relationship between a pressing member, a shielding member, and a weak part according to some embodiments of the present application;
FIG. 10 is a schematic structural diagram of a shielding member according to some embodiments of the present application;
FIG. 11 is a schematic diagram of a projection relationship between a pressing member and a shielding member according to some embodiments of the present application;
FIG. 12 is a schematic diagram of a positional relationship between a pressing member, a shielding member, and a weak part according to some embodiments of the present application;
FIG. 13 is a schematic diagram of a position relationship between a shielding member and a weak part according to some embodiments of the present application; and
FIG. 14 is an enlarged view of part b of the cross-sectional view of the first wall, the shielding member, and the pressing member of FIG. 6.

Description of the reference numerals:
battery cell 100; housing 10; first wall 11; weak part 110; shielding member 20; pressing member 30; hole 31; first groove 111; second groove 112; gas channel 113; plate body 32; protrusion 33; fluid channel 101; first surface 21; second surface 22; contact region 23; first portion 24; second portion 25; adhesive structure 26; width edge 34; first edge 260; second edge 261; first sub-portion 250; second sub-portion 251; electrode assembly 40; insulating film 50; connecting sheet 60; post terminal 70; adapting piece 80; housing body 12; opening 120; end cover plate 13; battery 200; electric device 1000; controller 300; motor 400; battery case 500.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends of the market situation, the application of batteries is becoming increasingly widespread. Batteries are not only applied in energy storage power systems such as hydropower, thermal power, wind power, and solar power stations, but are also widely applied in electric transportation vehicles such as electric bicycles, electric motorcycles, or electric vehicles, as well as in aerospace and other fields. With the continuous expansion of the application field of batteries, the market demand for batteries is also constantly increasing.

During use of a battery cell of a battery, if the battery cell is short-circuited or impacted by an external force, or experiences overcurrent, the chemical reaction in the battery cell will generate a large amount of heat and gas, resulting in an increase in the internal pressure of the battery cell. If the pressure cannot be effectively released, the structure of the battery cell may be damaged, and even an explosion may be caused.

A weak part may be disposed at the bottom of the battery cell, and the weak part may be formed by thinning a material at the bottom of the battery cell. The weak part may be an anti-explosion valve, and the anti-explosion valve may sense a pressure change in the battery. When the pressure reaches a certain value, the anti-explosion valve may open a channel to discharge high-pressure gas and liquid, to reduce the pressure in the battery, thereby reducing the probability of damage to the structure of the battery cell.

However, there is an electrolyte in the battery cell, and the electrolyte is usually in a moving state. The electrolyte may be in contact with the anti-explosion valve for a long time, which may cause the anti-explosion valve to be subjected to a certain impact. Further, if the flow speed of the electrolyte is excessively high, the electrolyte generates a larger impact force on the anti-explosion valve. This may cause the anti-explosion valve to be opened in advance, resulting in a functional failure of the anti-explosion valve.

To resolve the problem of functional failure of the anti-explosion valve, the anti-explosion valve may be covered with a shielding member, and the shielding member can cover the anti-explosion valve. However, the shielding member may migrate to other positions of the battery cell along with the electrolyte, so that the shielding member cannot cover the anti-explosion valve. In view of this, the present application provides a battery cell, in which pressure is applied to the shielding member to prevent the shielding member from migrating to other positions of the battery cell along with the electrolyte, thereby reducing the probability of functional failure of the anti-explosion valve, and further improving the stability of the battery cell.

The electric device according to the embodiments of the present application includes a battery cell or a battery according to any one of the following embodiments. Specifically, the electric device may use a battery or a battery cell as a power source. The electric device may be, but is not limited to, a mobile phone, a tablet, a laptop computer, an electric toy, an electric tool, an electric bicycle, an electric vehicle, a ship, a spacecraft, or the like.

The electric toy may include stationary or mobile electric toys, such as game consoles, electric vehicle toys, electric ship toys, or electric airplane toys. The spacecraft may include airplanes, rockets, space shuttles, spaceships, and the like.

In the following embodiments, for ease of description, the present application is illustrated by taking a vehicle as an example of the electric device according to the embodiments of the present application.

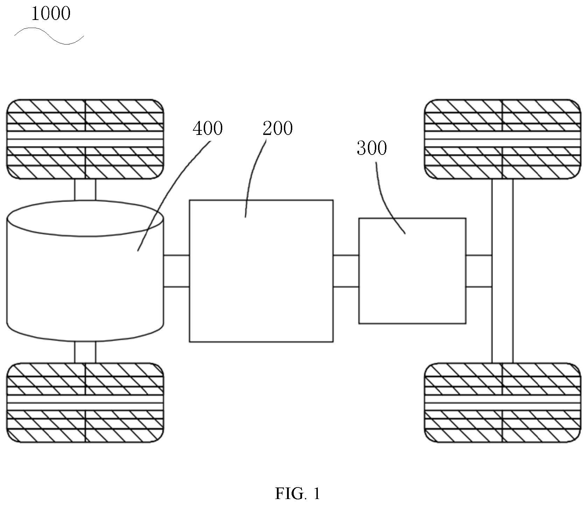

Referring to FIG. 1, FIG. 1 is a schematic structural diagram of an electric device 1000 according to some embodiments of the present application. A battery 200 is disposed inside the vehicle, and the battery 200 may be disposed at the bottom, head, or rear of the vehicle. The battery 200 may be configured to supply power to the vehicle. For example, the battery 200 may serve as an operation power source for the vehicle.

The vehicle may further include a controller 300 and a motor 400. The controller 300 is configured to control the battery 200 to supply power to the motor 400, e.g., for operation power needed by the vehicle for start-up, navigation, and driving.

In the embodiments of the present application, the battery 200 may not only serve as the operation power source for the vehicle, but also as a driving power source for the vehicle to, replacing or partially replacing fuel or natural gas, provide driving power for the vehicle.

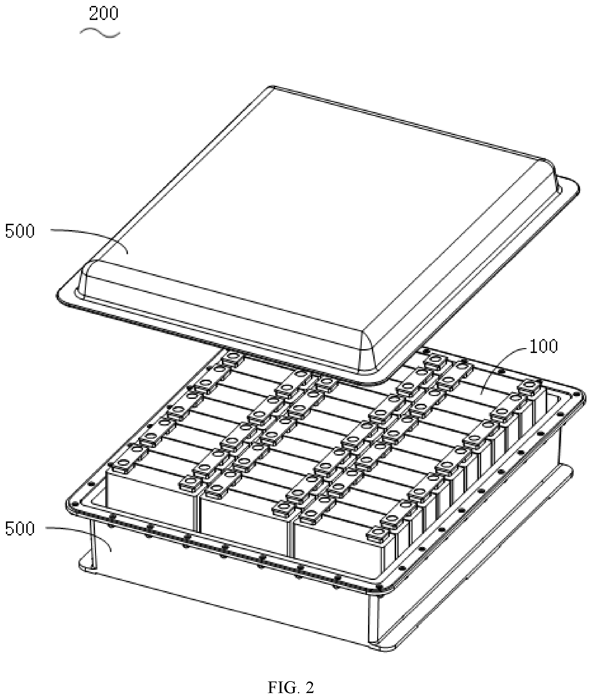

Referring to FIG. 2, FIG. 2 is a schematic structural diagram of a battery 200 according to some embodiments of the present application. The battery 200 according to the embodiments of the present application includes a plurality of battery cells 100 according to any one of the following embodiments.

In the embodiments of the present application, the battery cell 100 may include a lithium-ion secondary battery, a lithium-ion primary battery, a lithium-sulfur battery, a sodium-lithium-ion battery, a sodium-ion battery, a magnesium-ion battery, or the like. This is not limited in the embodiments and the examples of the present application. The battery cell 100 may be cylindrical, flat, rectangular parallelepiped-shaped, or in other shapes. This is also not limited in the embodiments and the examples of the present application. According to the way of encapsulation, the battery cell 100 is generally classified into three types: a cylindrical battery cell, a prismatic battery cell, and a pouch battery cell. This is also not limited in the embodiments and the examples of the present application.

The battery 200 generally includes a battery case 500 configured to encapsulate one or a plurality of battery cells 100. The plurality of battery cells 100 may be accommodated in the battery case 500, and the battery case 500 may prevent liquid or other foreign substances from affecting the charging or discharging of the battery cells 100. The battery case 500, as a carrier of the battery cells 100, plays a key role in the reliability of the battery cells 100. The battery case 500 should meet the requirements for strength and rigidity and the requirements for degrees of protection provided by enclosures for electrical equipment, while providing collision protection.

The shape of the battery case 500 may be rectangular parallelepiped, cubic, or the like. The battery case 500 may be cast by using a material such as a steel plate or aluminum alloy, or may be made of a new lightweight material, for example, a glass fiber reinforced composite material or a carbon fiber reinforced composite material.

In some embodiments, the battery 200 may be an energy storage device. The energy storage device includes an energy storage container, an energy storage electrical cabinet, and the like.

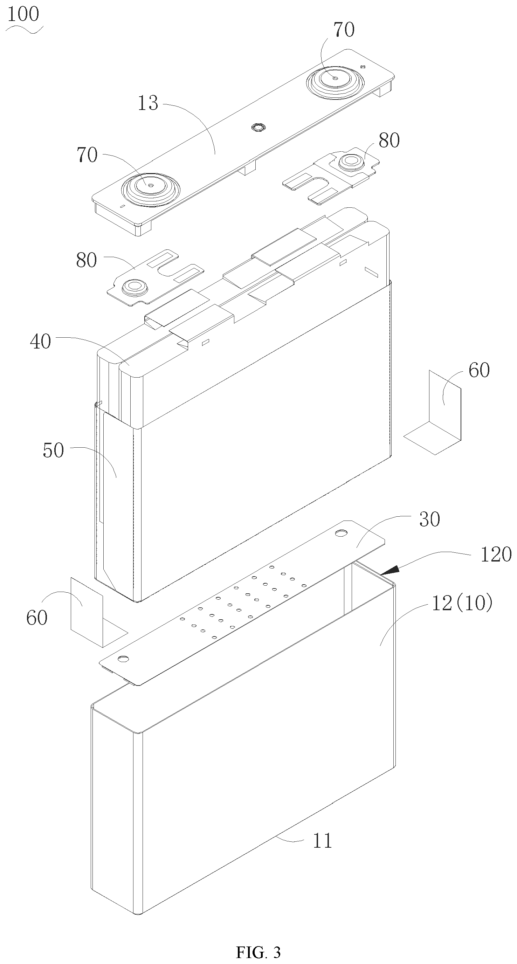

Referring to FIG. 3, FIG. 3 is an exploded diagram of a battery cell 100 according to some embodiments of the present application. In some embodiments, the battery cell 100 includes a housing body 12 and an electrode assembly 40. The electrode assembly 40 is disposed in the housing body 12.

The electrode assembly 40 is a component where the electrochemical reaction occurs in the battery cell 100. One or more electrode assemblies 40 may be accommodated in the housing body 12 of the battery cell 100.

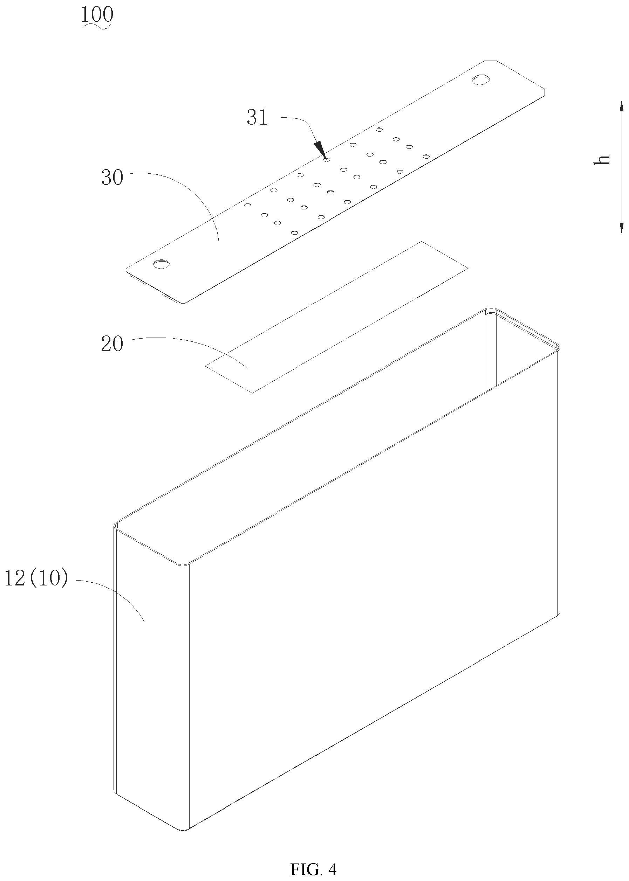

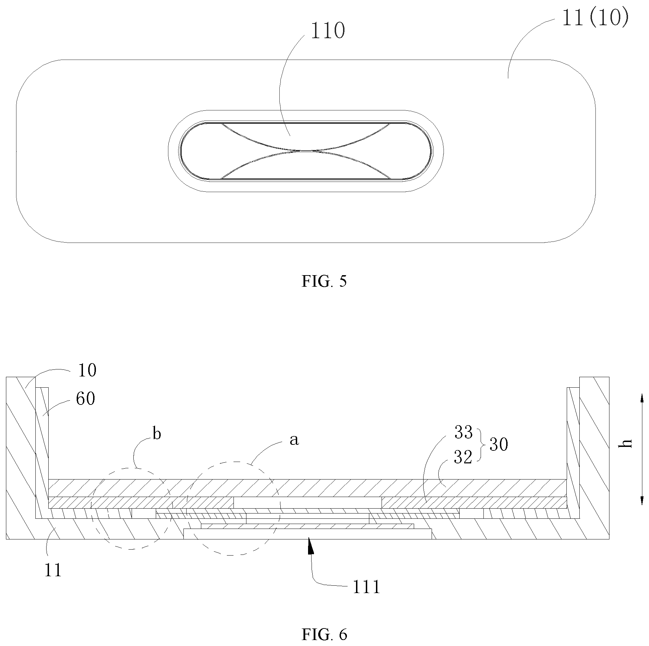

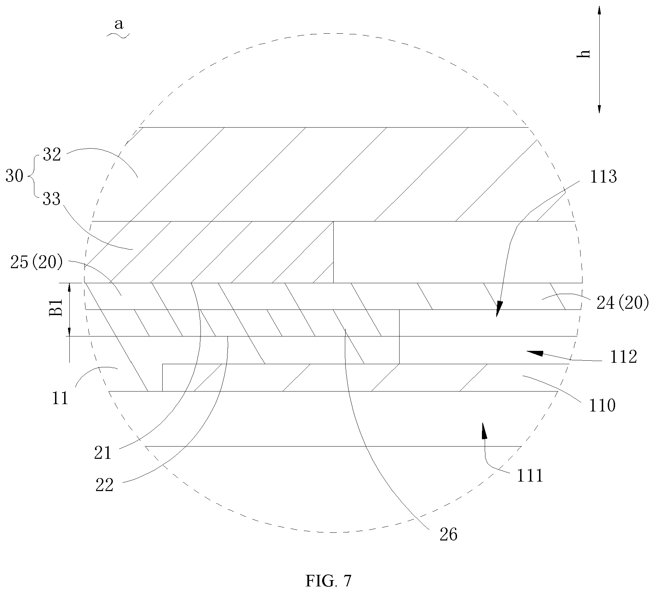

Referring to FIGs. 4, 5, 6, and 7, FIG. 4 is a partial schematic diagram of a battery cell 100 according to some embodiments of the present application; FIG. 5 is a schematic structural diagram of a first wall 11 and a weak part 110 according to some embodiments of the present application; FIG. 6 is a cross-sectional view of a first wall 11, a shielding member 20, and a pressing member 30 according to some embodiments of the present application; FIG. 7 is an enlarged view of part a of the cross-sectional view of the first wall 11, the shielding member 20, and the pressing member 30 of FIG. 6.

The battery cell 100 according to the embodiments of the present application includes a housing 10, a shielding member 20, and a pressing member 30. The housing 10 is provided with a first wall 11, and the first wall 11 is provided with a weak part 110; the shielding member 20 is disposed in the housing 10, and the shielding member 20 covers at least part of the weak part 110 in the thickness direction h of the first wall 11; the pressing member 30 is located on the side of the shielding member 20 facing away from the first wall 11, and the pressing member 30 presses against the shielding member 20.

Specifically, the housing 10 is a structure forming the outer contour of the battery cell 100, the interior of the housing 10 may be used to accommodate various members of the battery cell 100, and the housing 10 may include a plurality of walls having a certain thickness. The first wall 11 is any wall of the housing 10, which may be a top wall, a bottom wall, or a side wall.

The first wall 11 is provided with a weak part 110, and the weak part 110 is configured for breaking when a temperature or pressure in the housing 10 of the battery cell 100 exceeds a threshold to achieve pressure relief of the battery cell 100. The weak part 110 may be formed by thinning a material, for example, by scoring or grooving in the first wall 11. On the first wall 11, the thickness of the peripheral region of a thinned portion is greater than the thickness of the thinned portion.

In some embodiments, the weak part 110 includes a score, the score may be linear, and the shielding member 20 may shield part or all of the weak part 110. When the internal temperature or pressure of the battery cell 100 exceeds the threshold, the weak part 110 tears and breaks through the score, thereby achieving pressure relief.

In some embodiments, the thinned portion may also be an anti-explosion valve mounted to the housing 10. The anti-explosion valve may be of a closed annular shape, such as a circular annular shape or a rectangular annular shape. An internal region surrounded by the anti-explosion valve and an annular region in which the anti-explosion valve is located form a pressure relief zone, or an internal region surrounded by the anti-explosion valve, a region in which the anti-explosion valve is located, and a region outside the anti-explosion valve within a certain range form a pressure relief zone.

When the internal temperature or pressure of the housing 10 exceeds the threshold, part or all of the anti-explosion valve tears, so that the pressure relief zone is flipped up relative to other regions of the first wall 11 or the pressure relief zone is separated from the first wall 11, to achieve pressure relief more quickly.

The anti-explosion valve may also be of a non-closed annular shape, such as a C-shaped annular structure. A region surrounded by a circular ring or a ring-like structure corresponding to the C-shaped annular structure, or the surrounded region and a region outside the circular ring or the ring-like structure within a certain range form a pressure relief zone.

When the internal temperature or pressure of the housing 10 exceeds the threshold, part or all of the anti-explosion valve tears, so that the pressure relief zone is flipped up relative to other regions of the first wall 11 to achieve pressure relief more quickly.

The shielding member 20 may be made of an insulating material. For example, the shielding member 20 may include a portion made of a polyethylene terephthalate (PET) material. In the thickness direction h of the first wall 11, the shielding member 20 covers at least part of the weak part 110. "Cover" means that the shielding member 20 is overlaid on the surface of the weak part 110, or that the shielding member 20 and the weak part 110 are spaced apart from each other, but the orthographic projection of the shielding member 20 onto the first wall 11 is overlaid on the weak part 110.

In some embodiments, the shielding member 20 is connected to the inner wall of the housing 10. For example, the shielding member 20 may be connected to the first wall 11 of the housing 10, or may be connected to another inner wall.

In some embodiments, the shielding member 20 is connected to the first wall 11 of the housing 10. As the weak part 110 is disposed on the first wall 11, and the shielding member 20 is also connected to the first wall 11, the shielding member 20 occupies less space in the housing 10 on the basis of covering the weak part 110.

Further, as the shielding member 20 is disposed in the housing 10, the shielding member 20 covers the inner side of the weak part 110, that is, the shielding member 20 separates part of the weak part 110 shielded by the shielding member from the electrolyte, so that the electrolyte can be prevented from directly contacting the weak part 110, thereby protecting the weak part 110 to a certain extent.

The pressing member 30 is configured to apply pressure to stabilize the position of the shielding member 20, so that the shielding member 20 can effectively cover the weak part 110. The pressing member 30 may be the bottom support plate of the battery cell 100. As the bottom support plate is a structural member located at the bottom of the housing 10 of the battery cell 100, there is no need to add an additional part in the housing 10, thereby avoiding additional space occupation caused by the arrangement of the pressing member 30.

The bottom support plate supports the electrode assembly 40 of the battery cell 100, helping to maintain the structural integrity of the electrode assembly 40. In this way, the pressure applied by the bottom support plate to the shielding member 20 is at least the sum of the gravity of the bottom support plate and the gravity of the electrode assembly 40, so that the position of the shielding member 20 can be more effectively stabilized.

Certainly, the pressing member 30 may also be an independently manufactured member. After the manufacturing is completed, the pressing member 30 is placed on the side of the shielding member 20 facing away from the first wall 11, and the pressing member 30 presses against the shielding member 20 to limit the position of the shielding member 20.

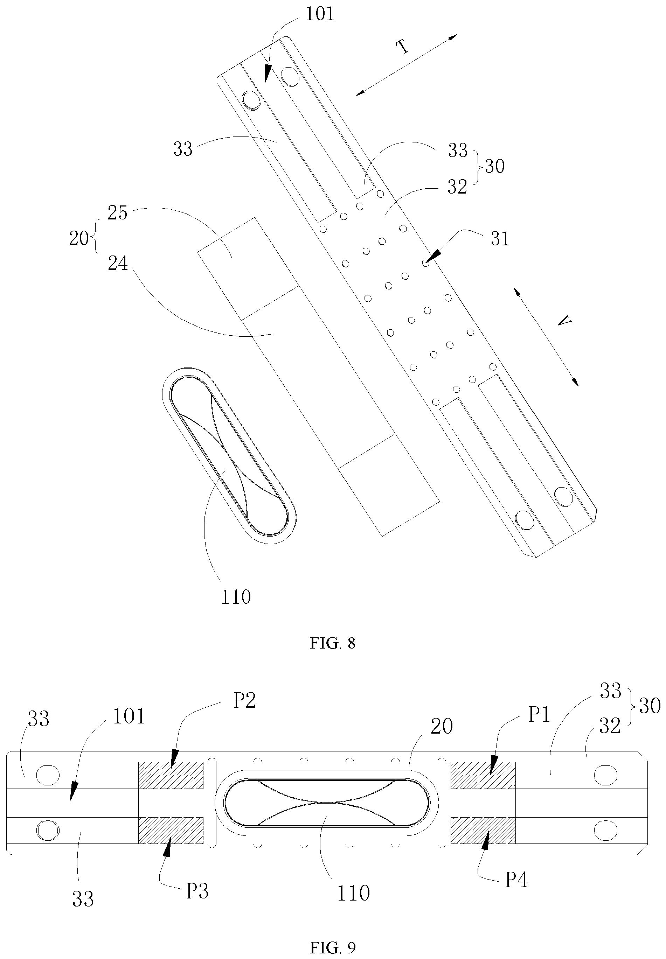

Referring to FIG. 8, FIG. 8 is an exploded schematic diagram of a pressing member 30, a shielding member 20, and a weak part 110 according to some embodiments of the present application. In some embodiments, the pressing member 30 may be provided with a plurality of holes 31, and the hole 31 may be a through hole penetrating through the pressing member 30 in the thickness direction of the pressing member 30. The thickness direction of the pressing member 30 may be the same as the thickness direction h of the first wall 11.

After the pressing member 30 presses against the shielding member 20, there may be a relatively small gap between the shielding member 20 and the pressing member 30. Due to the relatively small gap, it may be difficult for the electrolyte to contact the shielding member 20, which may cause the electrolyte to impact the pressing member 30 rather than the shielding member 20 when the pressure in the housing 10 exceeds the threshold. As a result, the electrolyte may not impact the weak part 110, and the weak part 110 may not be opened, resulting in the functional failure of the weak part 110, that is, a failure of the pressure relief function. The arrangement of the hole 31 facilitates the contact of part of the electrolyte with the shielding member 20, reducing the probability of functional failure of the weak part 110.

In the battery cell 100 according to the embodiments of the present application, the weak part 110 can be opened when pressure in the housing 10 reaches a certain value, so as to reduce the pressure in the housing 10, thereby reducing the probability of damage to the structure of the battery cell 100. The shielding member 20 can reduce the impact of the electrolyte on at least part of the weak part 110 in the thickness direction of the first wall 11, thereby reducing, to some extent, the probability that the weak part 110 is opened in advance due to the impact of the electrolyte. The pressing member 30 can apply a certain force to the shielding member 20, so as to limit the position of the shielding member 20 and reduce the probability that the shielding member 20 migrates to other positions along with the flow of the electrolyte, so that the shielding member 20 can continuously cover the weak part 110.

Referring to FIGs. 6 and 7, in some embodiments, the first wall 11 is provided with a first groove 111 and a second groove 112; the first groove 111 extends from the outer surface of the first wall 11 to the inner surface of the first wall 11 in the thickness direction h of the first wall 11, the second groove 112 penetrates through the bottom surface of the first groove 111 and the inner surface of the first wall 11, and the weak part 110 is disposed in the first groove 111.

Specifically, the first groove 111 and the second groove 112 may be formed by removing part of a material on the first wall 11. The bottom wall of the first groove 111 may be provided with the first groove 111, and the bottom wall of the first groove 111 may be provided with a score to form the weak part 110. The arrangement of the first groove 111 reduces the thickness of a region of the first wall 11 provided with the weak part 110, so as to achieve pressure relief through the weak part 110.

In this way, the arrangement of the first groove 111 and the second groove 112 is conducive to thinning the first wall 11, and the weak part 110 is disposed in the first groove 111, so that the weak part 110 can be opened in time when the pressure in the housing 10 reaches a certain value, thereby improving the functional stability of the weak part 110.

In some embodiments, the first wall 11 is provided with a through hole penetrating through the first wall 11. The weak part 110 may be an anti-explosion valve sheet, the anti-explosion valve sheet may be mounted in the through hole, and the anti-explosion valve sheet may be welded and fixed to the first wall 11. The anti-explosion valve sheet may be provided with a score, so that the anti-explosion valve sheet can be opened in time when the pressure in the housing 10 reaches a certain value, thereby improving the functional stability of the anti-explosion valve sheet.

Referring to FIGs. 7 and 8, in some embodiments, the pressing member 30 includes a plate body 32 and a protrusion 33 disposed on the plate body 32, the protrusion 33 presses against the shielding member 20, and the protrusion 33 is configured to form a fluid channel 101.

Specifically, the plate body 32 may be a plate of a regular shape, such as a square plate, or a plate of an irregular shape. The protrusion 33 may be a protrusion or a structure located on the plate body 32. The protrusion 33 may be integrally formed with the plate body 32, or the protrusion 33 may be separately formed from the plate body 32. The shape of the protrusion 33 may be a regular shape, such as a rectangular parallelepiped shape, or may be an irregular shape. The numbers of the protrusions 33 and the plate bodies 32 may be in a one-to-one correspondence, or may be in a many-to-one correspondence, that is, a plurality of protrusions 33 correspond to one plate body 32. The shape and number of the protrusions 33 may be designed as required. This is not limited in the embodiments of the present application.

The fluid channel 101 may be a channel defined between the protrusions 33. It may be understood that the plate body 32 may be provided with a plurality of protrusions 33. There is a gap between the protrusions 33, and the gap is the fluid channel 101. The fluid channel 101 may also be a channel defined by the protrusion 33 and the inner wall of the housing 10. It may be understood that there may be a gap between the protrusion 33 and the inner wall, and the gap is the fluid channel 101.

The fluid may be gas or an electrolyte. The fluid channel 101 may disperse the impact force of the electrolyte, thereby reducing the probability that the shielding member 20 migrates to other positions along with the flow of the electrolyte, so that the shielding member 20 can continuously cover the weak part 110.

The fluid channel 101 may also serve as a channel through which gas passes. When the pressure in the housing 10 exceeds the threshold, the gas in the housing 10 can pass through the fluid channel 101, thereby impacting the shielding member 20 and further impacting the weak part 110 to achieve the pressure relief function.

In this way, the protrusion 33 can press against the shielding member 20 to reduce the probability that the shielding member 20 migrates to other positions along with the flow of the electrolyte, so that the shielding member 20 can continuously cover the weak part 110. The fluid channel 101 enables part of the electrolyte to flow between the shielding member 20 and the pressing member 30. When the pressure in the housing 10 reaches a certain value, the electrolyte can impact the shielding member 20 and further impact the weak part 110, so that the weak part 110 can be opened.

Referring to FIG. 8, in some embodiments, a plurality of protrusions 33 are provided, the plurality of protrusions 33 are arranged in the width direction T of the pressing member 30, at least one of the protrusions 33 presses against the shielding member 20, and the fluid channel 101 is formed between the plurality of protrusions 33.

Specifically, the number of protrusions 33 may be two, three, four, or even more. The plurality of protrusions 33 may be spaced apart on the plate body 32, a plurality of gaps may be formed between the plurality of protrusions 33, and the plurality of gaps may be used as a channel through which the fluid passes, that is, the fluid channel 101. The width direction T of the pressing member 30 may be perpendicular to the length direction V of the shielding member 20.

In this way, the plurality of protrusions 33 can increase a contact area between the pressing member 30 and the shielding member 20, so that the pressing member 30 can effectively press against the shielding member 20. The fluid channel 101 formed between the plurality of protrusions 33 can enable part of the electrolyte to flow according to a predetermined flow path, so that the flow behavior of the electrolyte can be more accurately controlled. When the pressure in the housing 10 reaches a certain value, the electrolyte impacts the shielding member 20 along a predetermined flow path and further impacts the weak part 110, so that the weak part 110 can be opened.

The plurality of protrusions 33 may all press against the shielding member 20, and the area where each protrusion 33 presses against the shielding member 20 may be equal or unequal. Referring to FIGs. 8 and 9, FIG. 9 is a schematic diagram of a positional relationship between a pressing member 30, a shielding member 20, and a weak part 110 according to some embodiments of the present application. In some embodiments, the plurality of protrusions 33 all press against the shielding member 20, and the area where each protrusion 33 presses against the shielding member 20 is equal.

Specifically, the number of protrusions 33 may be four, areas of surfaces of the four protrusions 33 facing the shielding member 20 may be the same, and the surfaces of the four protrusions 33 facing the shielding member 20 may be completely pressed against the shielding member 20. Areas of the four protrusions 33 pressing against the shielding member 20 may be P1, P2, P3, and P4, respectively. P1, P2, P3, and P4 are all equal.

It should be noted that the value of the number of protrusions 33 here is only an example and cannot be understood as a limitation on the embodiments of the present application.

In this way, the area where each protrusion 33 presses against the shielding member 20 is equal, which ensures that a pressing force on the shielding member 20 is evenly distributed, and an unbalanced pressure effect caused by a certain protrusion 33 being too large or too small will not occur, which helps to improve the stability of the shielding member 20 and helps the electrolyte to be evenly distributed around the weak part 110.

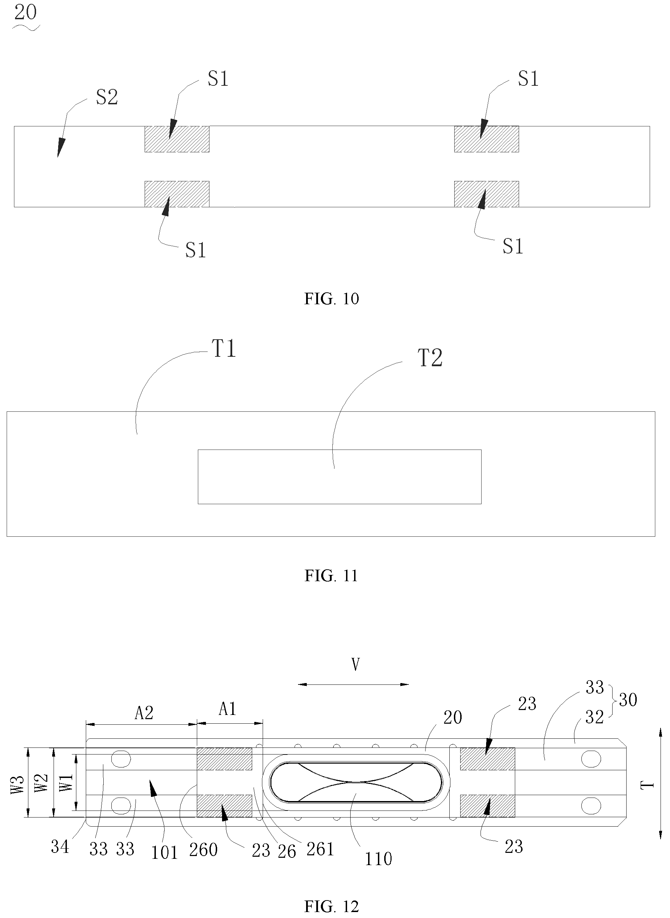

Referring to FIGs. 7 and 10, FIG. 10 is a schematic structural diagram of a shielding member 20 according to some embodiments of the present application. In some embodiments, the shielding member 20 includes a first surface 21 and a second surface 22 opposite to each other, the protrusion 33 presses against the first surface 21, the area of the first surface 21 in contact with the protrusion 33 is S1, the area of the first surface 21 is S2, and S1 and S2 satisfy: 20% ≤ S1/S2 ≤ 80%,
such as 25% ≤ S1/S2 ≤ 80%, 25% ≤ S1/S2 ≤ 75%, 30% ≤ S1/S2 ≤ 60%, 20% ≤ S1/S2 ≤ 60%, or 20% ≤ S1/S2 ≤ 75%; S1/S2 = 20%, S1/S2 = 25%, S1/S2 = 30%, S1/S2 = 60%, or S1/S2 = 80%.

Specifically, the first surface 21 may be a surface on the side of the shielding member 20 facing away from the weak part 110, and the first surface 21 may be a flat surface, a curved surface, or a combined surface of a flat surface and a curved surface. The second surface 22 may be a surface on the side of the shielding member 20 facing the weak part 110, a partial region of the second surface 22 may cover the weak part 110, and another partial region of the second surface 22 may be attached to the first wall 11. The second surface 22 may be a flat surface, a curved surface, or a combined surface of a flat surface and a curved surface.

The shielding member 20 may be of a sheet-like structure, and in the thickness direction of the shielding member 20, the first surface 21 may be located above the second surface 22. The protrusion 33 can apply pressure to the first surface 21, so that the second surface 22 is closely attached to the first wall 11, and thus a relative position between the second surface 22 and the first wall 11 remains substantially unchanged. The thickness direction of the shielding member 20 may be the same as the thickness direction h of the first wall 11.

In this way, within this range, the protrusion 33 can effectively press against the first surface 21, thereby stably limiting the position of the shielding member 20 and reducing the probability that the shielding member 20 migrates to other positions along with the flow of the electrolyte, so that the shielding member 20 can continuously cover the weak part 110. In addition, the electrolyte can flow in a region where the protrusion 33 is not in contact with the first surface 21. When the pressure in the housing 10 reaches a certain value, the electrolyte can impact the shielding member 20 and further impact the weak part 110, so that the weak part 110 can be opened.

Referring to FIGs. 8 and 11, FIG. 11 is a schematic diagram of a projection relationship between a pressing member 30 and a shielding member 20 according to some embodiments of the present application. In some embodiments, in the thickness direction h of the first wall 11, the projection T1 of the pressing member 30 completely covers the projection T2 of the shielding member 20.

Specifically, the shape of the pressing member 30 may match that of the shielding member 20, so that the shielding member 20 can be located within a region covered by the pressing member 30, making the edges of the shielding member 20 less prone to defects such as warping and flanging. As a result, the pressing member 30 can effectively press against the shielding member 20. For example, in the thickness direction h of the first wall 11, the surface of the pressing member 30 facing the shielding member 20 may be rectangular, the surface of the shielding member 20 facing the pressing member 30 may be rectangular, and the area of the surface of the pressing member 30 facing the shielding member 20 may be greater than the area of the surface of the shielding member 20 facing the pressing member 30, that is, the projection T1 of the pressing member 30 completely covers the projection T2 of the shielding member 20.

In this way, in the thickness direction h of the first wall 11, the projection T1 of the pressing member 30 completely covers the projection T2 of the shielding member 20, so that the shielding member 20 is always within the coverage of the pressing member 30, thereby enabling the pressing member 30 to effectively reduce the impact of the electrolyte on the shielding member 20. As a result, the probability that the shielding member 20 migrates to other positions along with the flow of the electrolyte is reduced, which allows the shielding member 20 to continuously cover the weak part 110.

Referring to FIG. 12, FIG. 12 is a schematic diagram of a positional relationship between a pressing member 30, a shielding member 20, and a weak part 110 according to some embodiments of the present application. In some embodiments, the shielding member 20 is provided with a contact region 23 in contact with the pressing member 30, and the contact region 23 is spaced apart from the weak part 110 in a direction perpendicular to the thickness of the first wall 11.

Specifically, the contact region 23 is a portion of the shielding member 20 that is in direct contact with the pressing member 30. The pressing member 30 presses against the contact region 23, and the pressing member 30 applies pressure to the contact region 23, so that a relative position between the shielding member 20 and the first wall 11 can remain substantially unchanged.

The shielding member 20 may be of a sheet-like structure, and the thickness direction of the shielding member 20 may be the same as the thickness direction h of the first wall 11. The direction perpendicular to the thickness of the first wall 11 may be the length direction V or width direction of the shielding member 20. For example, the contact region 23 is spaced apart from the weak part 110 in the length direction V of the shielding member 20.

In this way, the contact region 23 is spaced apart from the weak part 110 in the direction perpendicular to the thickness of the first wall 11, which can reduce the probability that the pressing member 30 is in contact with the weak part 110, thereby reducing the probability that the pressing member 30 applies pressure to the weak part 110, and further reducing the probability that the weak part 110 is opened in advance under the pressure of the pressing member 30.

Referring to FIG. 12, in some embodiments, the width of the weak part 110 is W1, the maximum distance of the plurality of protrusions 33 in the width direction T of the pressing member 30 is W2, and W1 and W2 satisfy: W2 ≥ W1 + 4, in mm.

Specifically, in the width direction T of the pressing member 30, the maximum distance of the plurality of protrusions 33 is a distance between the edges of two outermost protrusions 33.

In this way, a region where the protrusion 33 presses against the shielding member 20 can be distributed outside the weak part 110, so that the shielding member 20 can be effectively pressed against.

Referring to FIG. 12, in some embodiments, the maximum distance of the plurality of protrusions 33 in the width direction T of the pressing member 30 is W2, the width of the shielding member 20 is W3, and W2 and W3 satisfy: 0 ≤ |W3 - W2| ≤ 10, in mm. In this way, the width W3 of the shielding member 20 is close to that of the region that the protrusions 33 can press against, enabling the edges of the shielding member 20 to be effectively pressed against.

Referring to FIGs. 7 and 8, in some embodiments, the shielding member 20 includes a first portion 24, a second portion 25, and an adhesive structure 26 disposed on the second portion 25; the first portion 24 is connected to the second portion 25, the first portion 24 covers at least part of the weak part 110 in the thickness direction h of the first wall 11, the second portion 25 is bonded to the first wall 11 by the adhesive structure 26, and the pressing member 30 presses against the second portion 25.

Specifically, the first portion 24 is configured to resist the electrolyte. When the pressure in the housing 10 does not exceed the threshold, the first portion 24 can reduce the probability that the electrolyte directly acts on the weak part 110, thereby reducing the probability that the weak part 110 is opened in advance.

The second portion 25 may be integrally formed with the first portion 24, or may be separately formed from the first portion 24. The shielding member 20 includes an adhesive structure 26 disposed on the second portion 25, and the second portion 25 may be bonded to the first wall 11 by the adhesive structure 26. The adhesive structure 26 may protrude from the surface of the second portion 25, and the adhesive structure 26 may be made of a material that can adapt to the internal environment of the housing 10, such as epoxy glue or silica gel. The internal environment of the housing 10 includes an electrolyte, a temperature, and the like.

Further, before bonding, surfaces of the first wall 11 and the second portion 25 may be properly treated to enhance adhesive properties and improve bonding adhesion. For example, the surfaces of the first wall 11 and the second portion 25 may be subjected to cleaning, dirt removal, polishing, and the like.

In this way, the first portion 24 covers at least part of the weak part 110 in the thickness direction h of the first wall 11, thereby providing protection for the weak part 110. The second portion 25 is bonded to the first wall 11 by the adhesive structure 26, so that the shielding member 20 can form a relatively stable connection to the first wall 11. The pressing member 30 pressing against the second portion 25 further enhances the stability of the connection between the shielding member 20 and the first wall 11.

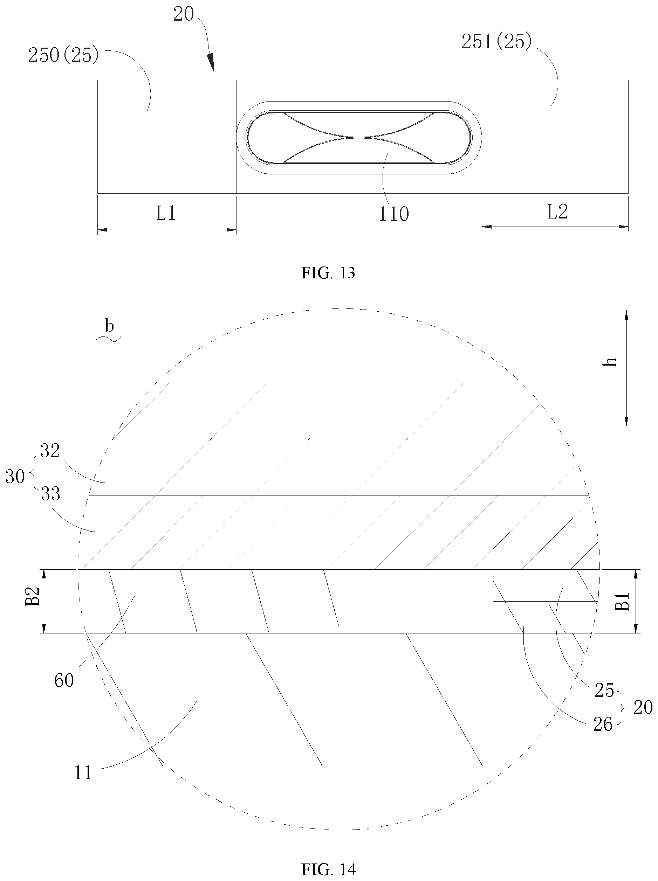

Referring to FIG. 13, FIG. 13 is a schematic diagram of a position relationship between a shielding member 20 and a weak part 110 according to some embodiments of the present application. In some embodiments, the weak part 110 may divide the second portion 25 into two spaced regions, i.e., a first sub-portion 250 and a second sub-portion 251. In the direction perpendicular to the thickness of the first wall 11, the length L1 of the first sub-portion 250 is equal to the length L2 of the second sub-portion 251, so as to ensure the uniformity of bonding and avoid one of the first sub-portion 250 and the second sub-portion 251 from defects such as warping or flanging.

Referring to FIG. 7, in some embodiments, the adhesive structure 26 protrudes from the surface of the second portion 25, the adhesive structure 26 and the first portion 24 jointly define a gas channel 113, and the gas channel 113 extends to the edge of the shielding member 20.

Specifically, the second portion 25 may be connected to two ends of the first portion 24, and the second portion 25 may be coplanar with the first portion 24. The gas channel 113 may be in communication with the second groove 112, and the gas channel 113 may be covered by the first portion 24.

In this way, gas in the housing 10 can flow to the weak part 110 through the gas channel 113, so that the weak part 110 can be opened when the pressure in the housing 10 reaches a certain value, thereby improving the functional stability of the weak part 110. In addition, the arrangement of the gas channel 113 also facilitates detection of the welding of the weak part 110.

Referring to FIG. 12, in some embodiments, the pressing member 30 includes a width edge 34, and in the length direction V of the shielding member 20, the adhesive structure 26 includes a first edge 260 and a second edge 261 opposite to the first edge 260; the first edge 260 is proximal to the width edge 34 relative to the second edge 261, a distance between the first edge 260 and the second edge 261 is A1, a distance between the first edge 260 and the width edge 34 is A2, and A1 and A2 satisfy: 10% ≤ A1/A2 ≤ 80%.

For example, a relationship between A1 and A2 may be 10% ≤ A1/A2 ≤ 75%, 15% ≤ A1/A2 ≤ 75%, 20% ≤ A1/A2 ≤ 70%, 20% ≤ A1/A2 ≤ 60%, 60% ≤ A1/A2 ≤ 80%, or the like. A1/A2 may be 10%, 15%, 20%, 60%, 80%, or the like.

Specifically, the width edge is an end surface in the length direction of the pressing member 30, and the length direction of the pressing member 30 may be perpendicular to the width direction T of the pressing member 30. In some embodiments, the adhesive structure 26 may be symmetrically disposed on the shielding member 20, so A1 and A2 correspond to two sets of values.

In this way, the pressing member 30 can effectively press against the shielding member 20, and can further press against a region where the adhesive structure 26 is bonded to the shielding member 20 and the first wall 11, thereby improving the connection strength between the shielding member 20 and the first wall 11.

Referring to FIG. 3, in some embodiments, the battery cell 100 includes an electrode assembly 40, an insulating film 50, and a connecting sheet 60; the insulating film 50 wraps the electrode assembly 40 and is located on the side of the pressing member 30 facing away from the first wall 11, one end of the connecting sheet 60 is connected to the insulating film 50, the protrusion 33 presses against the other end of the connecting sheet 60, and the thickness of the shielding member 20 is less than or equal to the thickness of the connecting sheet 60. The thickness of the shielding member 20 is the maximum thickness of the shielding member 20 as a whole.

Specifically, the electrode assembly 40 is a component where the electrochemical reaction occurs in the battery cell 100, and the housing 10 may include one or more electrode assemblies 40. The electrode assembly 40 is mainly formed by winding or stacking a positive electrode plate and a negative electrode plate, and a separator is typically disposed between the positive electrode plate and the negative electrode plate. The portions of the positive electrode plate and the negative electrode plate that contain the active substance constitute the electrode main body of the electrode assembly 40, and the portions of the positive electrode plate and the negative electrode plate that do not contain the active substance each constitute a tab.

The insulating film 50 is configured to isolate the electrode assembly 40 from the inner wall of the housing 10 to reduce the probability of short circuit caused by direct contact between the electrode assembly 40 and the inner wall. The insulating film 50 may be a polyester film, a polypropylene film, polyethylene, or the like. For example, the insulating film 50 may be a polyester film. The polyester film has excellent electrical insulating properties, mechanical properties, and heat resistance, and can effectively reduce the probability of short circuit of the electrode assembly 40.

The connecting sheet 60 may be provided with a surface connected to the insulating film 50, and the surface may be connected to the insulating film 50 by bonding. One end of the connecting sheet 60 may be used to fix the insulating film 50, so that the insulating film 50 can continuously wrap the electrode assembly 40, thereby reducing the probability of functional failure of the insulating film 50. The other end of the connecting sheet 60 may be connected to the pressing member 30 by bonding, and may be pressed against by the pressing member 30, thereby fixing the connecting sheet 60.

As one end of the connecting sheet 60 is fixed on the side of the pressing member 30 facing the first wall 11, the connecting sheet 60 occupies a certain space in the housing 10 in the thickness direction h of the first wall 11. The ends of the shielding member 20 and the connecting sheet 60 fixed on the pressing member 30 may be disposed on the same surface of the pressing member 30, and the thickness of the shielding member 20 is set to be less than or equal to the thickness of the connecting sheet 60, which can reduce the space occupation of the shielding member 20 in the thickness direction h of the first wall 11 and improve the internal space utilization rate of the housing 10.

Referring to FIGs. 6, 7, and 14, FIG. 14 is an enlarged view of part b of the cross-sectional view of the first wall 11, the shielding member 20, and the pressing member 30 of FIG. 6. The thickness B1 of the shielding member 20 may range from 0.01 mm to 3 mm, 0.05 mm to 2.5 mm, 0.1 mm to 2 mm, 0.5 mm to 1 mm, 0.01 mm to 0.3 mm, or the like. The thickness B1 of the shielding member 20 may be 0.01 mm, 0.05 mm, 0.1 mm, 0.3 mm, or 3 mm. The thickness B2 of the connecting sheet 60 may range from 0.01 mm to 5 mm, 0.05 mm to 4.5 mm, 0.1 mm to 4 mm, 0.2 mm to 3 mm, 0.3 mm to 0.5 mm, or the like. The thickness B2 of the connecting sheet 60 may be 0.01 mm, 0.2 mm, 0.3 mm, 0.5 mm, 5 mm, or the like.

Within these ranges, the shielding member 20 and the connecting sheet 60 are easy to manufacture, the shielding member 20 can effectively protect the weak part 110, and the connecting sheet 60 can effectively stabilize the insulating film 50.

In this way, the insulating film 50 can reduce the probability of contact between the electrode assembly 40 and the housing 10, thereby reducing the probability of short circuit of the electrode assembly 40, and further improving the reliability of the battery cell 100. The connecting sheet 60 can fix the insulating film 50, improve the stability of the insulating film 50 wrapping the electrode assembly 40, and connect the insulating film 50 and the pressing member 30, thereby reducing the probability that the pressing member 30 moves along with the flow of the electrolyte. The thickness of the shielding member 20 is less than or equal to the thickness of the connecting sheet 60, which can reduce the space occupation of the shielding member 20 in the thickness direction h of the first wall 11 and improve the internal space utilization rate of the housing 10.

Referring to FIG. 3, in some embodiments, the housing 10 includes a housing body 12 and an end cover plate 13, the housing body 12 is provided with an opening 120, the end cover plate 13 lids the opening 120 of the housing body 12, and the first wall 11 is located on the housing body 12.

Specifically, the end cover plate 13 refers to a component that lids the opening 120 of the housing body 12 to isolate the interior of the housing 10 from the external environment. The housing body 12 is a structure of the housing 10 for accommodating members such as the electrode assembly 40, and the shape of the opening 120 of the housing body 12 may be a regular shape, such as a square shape, or may be an irregular shape.

The battery cell 100 further includes a post terminal 70, and the post terminal 70 is configured to be electrically connected to the electrode assembly 40 to output or input the electric energy of the battery cell 100. The post terminal 70 includes a positive electrode post terminal and a negative electrode post terminal. In the length direction of the battery cell 100, the positive electrode post terminal and the negative electrode post terminal are spaced apart from each other on the end cover plate 13. The length direction of the battery cell 100 may be the same as the length direction V of the shielding member 20.

During the charging and discharging process of the battery, the positive electrode active substance and the negative electrode active substance react with the electrolyte, and the tabs are electrically connected to the post terminal 70 to form a current circuit. The tab includes a positive electrode tab and a negative electrode tab, the positive electrode tab is configured to be connected to the positive electrode post terminal, and the negative electrode tab is configured to be connected to the negative electrode post terminal.

The battery cell 100 further includes an adapting piece 80, the positive electrode tab is connected to the positive electrode post terminal through one adapting piece 80, and the negative electrode tab is connected to the negative electrode post terminal through another adapting piece 80.

The first wall 11 may be a wall located at the bottom region of the housing body 12. The weak part 110 may be specifically disposed on the wall plate of the housing body 12 opposite to the end cover plate 13, or may be disposed on another side wall of the housing body 12. The wall plate on which the weak part 110 is disposed is the first wall 11. When the housing 10 is provided with the weak parts 110 on different side walls, respectively, that is, the housing 10 is provided with a plurality of weak parts 110, the shielding member 20 at least shields at least a partial region of the weak part 110 located on the bottom wall plate of the housing 10.

In this way, the end cover plate 13 can separate the internal environment from the external environment of the housing body 12, thereby avoiding adverse effects of the external environment on the internal environment. The first wall 11 is located on the housing body 12, so that the weak part 110 has a relatively large design space, thereby improving the pressure relief effect of the weak part 110.

In other embodiments, the weak part 110 may be disposed on the end cover plate 13 to facilitate the replacement of the weak part 110.

Referring to FIGs. 3, 4, 5, and 8, in a specific embodiment, the battery cell 100 includes a housing 10, a shielding member 20, and a pressing member 30. The housing 10 is provided with a first wall 11 disposed at the bottom, the first wall 11 is provided with a weak part 110, and the weak part 110 is an anti-explosion valve. The shielding member 20 is a film made of a PET material, and the surface of the film facing the first wall 11 can be bonded to the first wall 11. The pressing member 30 is a bottom support plate in the battery cell 100.

Four protrusions 33 are disposed on the bottom support plate, all the four protrusions 33 can press against the film, and areas of the four protrusions 33 pressing against the film are equal, so as to reduce the probability that the film migrates to other positions along with the flow of the electrolyte, so that the film can continuously shield the anti-explosion valve.

Referring to FIG. 3, in some embodiments, when the battery cell 100 is in use, the first wall 11 is the bottom wall of the housing 10. In this way, when the battery cell 100 is in use, the shielding member 20 can reduce the probability that the shielding member 20 migrates to other positions due to the impact of the electrolyte on the bottom wall of the housing 10 by shielding the weak part 110.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, wherein the battery cell comprises:
a housing, wherein the housing is provided with a first wall, and the first wall is provided with a weak part;
a shielding member, wherein the shielding member is disposed in the housing, and the shielding member covers at least part of the weak part in a thickness direction of the first wall; and
a pressing member, wherein the pressing member is located on a side of the shielding member facing away from the first wall, and the pressing member presses against the shielding member.

2. The battery cell according to claim 1, wherein the pressing member comprises a plate body and a protrusion disposed on the plate body, the protrusion presses against the shielding member, and the protrusion is configured to form a fluid channel.

3. The battery cell according to claim 2, wherein a plurality of the protrusions are provided, the plurality of protrusions are arranged in a width direction of the pressing member, at least one of the protrusions presses against the shielding member, and the fluid channel is formed between the plurality of protrusions.

4. The battery cell according to claim 3, wherein the plurality of protrusions all press against the shielding member, and an area where each protrusion presses against the shielding member is equal.

5. The battery cell according to claim 3 or 4, wherein a width of the weak part is W1, a maximum distance of the plurality of protrusions in the width direction of the pressing member is W2, and W1 and W2 satisfy: W2 ≥ W1 + 4, in mm.

6. The battery cell according to any one of claims 3 to 5, wherein the maximum distance of the plurality of protrusions in the width direction of the pressing member is W2, a width of the shielding member is W3, and W2 and W3 satisfy: 0 ≤ |W3 - W2| ≤ 10, in mm.

7. The battery cell according to any one of claims 2 to 6, wherein the shielding member comprises a first surface and a second surface opposite to each other, the protrusion presses against the first surface, an area of the first surface in contact with the protrusion is S1, an area of the first surface is S2, and S1 and S2 satisfy: $20 % \leq S 1 / S 2 \leq 80 % .$

8. The battery cell according to any one of claims 2 to 6, wherein the battery cell comprises an electrode assembly, an insulating film, and a connecting sheet, wherein the insulating film wraps the electrode assembly and is located on a side of the pressing member facing away from the first wall, one end of the connecting sheet is connected to the insulating film, the protrusion presses against the other end of the connecting sheet, and a thickness of the shielding member is less than or equal to a thickness of the connecting sheet.

9. The battery cell according to any one of claims 1 to 8, wherein in the thickness direction of the first wall, a projection of the pressing member completely covers a projection of the shielding member.

10. The battery cell according to any one of claims 1 to 9, wherein the shielding member is provided with a contact region in contact with the pressing member, and the contact region is spaced apart from the weak part in a direction perpendicular to a thickness of the first wall.

11. The battery cell according to any one of claims 1 to 10, wherein the shielding member comprises a first portion, a second portion, and an adhesive structure disposed on the second portion, wherein the first portion is connected to the second portion, the first portion covers at least part of the weak part in the thickness direction of the first wall, the second portion is bonded to the first wall by the adhesive structure, and the pressing member presses against the second portion.

12. The battery cell according to claim 11, wherein the adhesive structure protrudes from a surface of the second portion, the adhesive structure and the first portion jointly define a gas channel, and the gas channel extends to an edge of the shielding member.

13. The battery cell according to claim 12, wherein the first wall is provided with a first groove and a second groove, wherein the first groove extends from an outer surface of the first wall to an inner surface of the first wall in the thickness direction of the first wall, the second groove penetrates through a bottom surface of the first groove and the inner surface of the first wall, the second groove is in communication with the gas channel, and the weak part is disposed in the first groove.

14. The battery cell according to any one of claims 11 to 13, wherein the pressing member comprises a width edge, and in a length direction of the shielding member, the adhesive structure comprises a first edge and a second edge opposite to the first edge, wherein the first edge is proximal to the width edge relative to the second edge, a distance between the first edge and the second edge is A1, a distance between the first edge and the width edge is A2, and A1 and A2 satisfy: 10% ≤ A1/A2 ≤ 80%.

15. The battery cell according to any one of claims 1 to 14, wherein the housing comprises a housing body and an end cover plate, the housing body is provided with an opening, the end cover plate lids the opening of the housing body, and the first wall is located on the housing body.

16. The battery cell according to any one of claims 1 to 15, wherein when the battery cell is in use, the first wall is a bottom wall of the housing.

17. A battery, wherein the battery comprises the battery cell according to any one of claims 1 to 16.

18. An electric device, wherein the electric device comprises the battery cell according to any one of claims 1 to 16 or the battery according to claim 17.
